# EUROPÄISCHE PATENTSCHRIFT

(11) **EP 2 145 914 B1**
(45) Veröffentlichungstag und Bekanntmachung des Hinweises auf die Patenterteilung: **23.01.2019**
(21) Anmeldenummer: 09165508.4
(22) Anmeldetag: 15.07.2009
(51) Int. Cl.: C08J 5/00, C08K 5/10, C08K 5/103

(54) **WEICHMACHERZUBEREITUNGEN**
SOFTENER PREPARATIONS
PRÉPARATIONS DE PLASTIFIANTS

(30) Priorität: 19.07.2008 DE 102008033834
(43) Veröffentlichungstag der Anmeldung: 20.01.2010
(60) Teilanmeldung: 18177896.0
(73) Patentinhaber: LANXESS Deutschland GmbH, 50569 Köln (DE)
(72) Erfinder: Hansel, Jan-Gerd, 51469 Bergisch-Gladbach (DE); Wiedemeier, Melanie, 41540 Dormagen-Delhoven (DE)

(56) Entgegenhaltungen:
- DE-A1- 1 917 699
- GB-A- 1 452 402
- JP-A- 2003 064 297

## Beschreibung

Die vorliegende Erfindung betrifft Weichmacherzubereitungen auf Basis von Triacetin mit kurzer Gelierzeit, ihre Verwendung und Polyvinylchlorid-Zubereitungen.

Mit dem Begriff "Weichmacher" (engl.: "plasticizer") werden in der chemisch-technischen Literatur Substanzen bezeichnet, die in der Lage sind, einen harten, spröden Stoff allein durch ihre Zumischung in eine weiche, dehnbare, zähe oder elastische Zubereitung zu überführen. Der Begriff wird in sehr vielen, unterschiedlichen Zusammenhängen verwendet. So ist er in der Betonverarbeitung (siehe zum Beispiel WO 98 58 887 A1) ebenso üblich, wie bei der Herstellung von Raketentreibstoffen (siehe zum Beispiel US 3,617,400). Im engeren Sinne werden mit dem Begriff "Weichmacher" in der Polymerverarbeitung eingesetzte Additive bezeichnet, die die mechanischen Eigenschaften von thermoplastischen Polymeren im oben genannten Sinne verändern können. Beispiele für Polymere, die mit Weichmachern verarbeitet werden, sind Polyvinylchlorid, Polyvinylbutyral, Polyamid und Celluloseacetat. Die mengenmäßig größte Anwendung ist in Polyvinylchlorid.

Die Eignung einer Substanz als Weichmacher für ein bestimmtes Polymer richtet sich nach den Eigenschaften des Polymers. Steigende technische und wirtschaftliche Anforderungen an Herstellprozesse und weichgemachte Kunststoffe haben in den letzten 50 Jahren dazu geführt, dass je nach Polymer unterschiedliche Substanzen als Weichmacher bevorzugt werden. Typischer Weise sind dabei Substanzen, die in einem bestimmten Polymer gut als Weichmacher geeignet sind, in einem anderen Polymer schlecht geeignet oder sogar ungeeignet.

Triacetin (Glycerintriacetat, Chemical Abstracts Registry Number 102-76-1) wird als Weichmacher für Celluloseacetat (siehe zum Beispiel GB 317,443), Stärke (siehe zum Beispiel WO 9005161 A1) und Polylactid (siehe zum Beispiel US 6,117,928) beschrieben. Die Verwendung als Weichmacher in Polyvinylchlorid ist für Triacetin hingegen nicht bekannt. In den unten angeführten Vergleichsbeispielen wird gezeigt, dass die Lösetemperatur von Triacetin in Polyvinylchlorid über 200 °C liegt. Dies belegt die ausgesprochen schlechte Verträglichkeit von Triacetin mit Polyvinylchlorid.

Unter der Lösetemperatur wird im Zusammenhang mit Weichmachern die Temperatur verstanden, bei der aus einer Polyvinylchlorid-Suspension in einem Weichmacher durch Gelieren eine homogene Phase wird. Eine niedrige Lösetemperatur weist auf ein gutes Geliervermögen des Weichmachers hin. Dies ist oft erwünscht, da dann die Verarbeitung energiesparend bei niedrigen Temperaturen durchgeführt werden kann. Substanzen mit Lösetemperaturen oberhalb von 180 °C sind als Weichmacher für Polyvinylchlorid ungeeignet (L. Meier: "Weichmacher", in R. Gächter, H. Müller (Ed.): Taschenbuch der Kunststoffadditive, 3. Ausgabe, S. 361 - S. 362, Hanser Verlag, München 1990). Bei der Verarbeitung von Polyvinylchlorid mit Weichmachern können neben einer ausreichend niedrigen Lösetemperatur weitere Eigenschaften des Weichmachers eine entscheidende Rolle spielen. So kann es bei der Herstellung von Polyvinylchlorid-Plastisolen wichtig sein, dass die zunächst zubereitete Polyvinylchlorid-Suspension in dem Weichmacher eine niedrige Viskosität hat, damit sie leicht verarbeitet werden kann. In vielen Anwendungen soll die anschließende Gelierung der Suspension unter Wärmeeinfluss möglichst schnell ablaufen, um so den Zeit- und Energieaufwand zu begrenzen. Nach dem Stand der Technik wird in solchen Fällen beispielsweise Benzylbutylphthalat als Weichmacher eingesetzt.

Der Weichmacher soll in der ausgelierten, weichgemachten Polyvinylchlorid-Zubereitung nicht nur für die gewünschte Weichheit sorgen, sondern beispielsweise auch möglichst resistent gegenüber Migration in angrenzende Medien sein.

Weitere Forderungen an Weichmacher ergeben sich aus dem Wunsch nach Unbedenklichkeit gegenüber Mensch und Umwelt. Nach der in der Europäischen Union gültigen Richtlinie 2005/84/EG dürfen beispielsweise die Weichmacher Di(2-ethylhexyl)phthalat, Dibutylphthalat und Benzylbutylphthalat nicht mehr in Spielzeug oder Babyartikeln verwendet werden und die Weichmacher Diisononylphthalat, Diisodecylphthalat und Di-n-octylphthalat nicht mehr in Spielzeug oder Babyartikeln, die von Kindern in den Mund genommen werden können, verwendet werden. Vor allem für die genannten Weichmacher Di(2-ethylhexyl)phthalat, Dibutylphthalat, und Benzylbutylphthalat besteht daher ein Bedarf an geeigneten Ersatzstoffen.

Angesichts dieser Einschränkungen, die für manche Konsumenten als unübersichtlich und verunsichernd erscheinen können, gehen viele Hersteller sogar dazu über, bei der Herstellung von weichgemachtem Polyvinylchlorid generell auf alle phthalathaltigen Weichmacher zu verzichten. Daraus ergibt sich ein Bedarf an phthalatfreien Weichmachern, die hinsichtlich Verarbeitbarkeit und Nutzeigenschaften das Leistungsniveau von phthalathaltigen Weichmachern erreichen.

Im Hinblick auf die oben erwähnte schnelle Gelierung besteht ein Bedarf an einem Ersatzstoff für Benzylbutylphthalat, insbesondere ein Bedarf an einem phthalatfreien Ersatzstoff für Benzylbutylphthalat bzw. einem Ersatzstoff der besser ist als bisherige phthalatfreie Weichmacher im PVC, der aber mit dem Leistungsniveau phthalathaltiger Weichmacher vergleichbar ist.

Dokument GB 1452402 A offenbart eine Zubereitung mit 6 Gew.-% PVC und 14 Gew.-% Triacetin in Cyclohexanon.

Dokument DE 1917 699 offenbart eine Mischung von auf chemischen Wege hergestellten Kunststoffen, vorwiegend Polyvinylchlorid (PVC), und Weichmachern, speziell Dioktylphtalat (DOP), mit Blei, gekennzeichnet dadurch, dass dieser Mischung Glycerin-Derivate, vorwiegend Glycerin-Triacetat (Triacetin), zur Steuerung bzw. Unterbindung von unerwünschten Reaktionen während des Gelierprozesses und von Geruchsbildung am Fertigteil, zugesetzt wird.

Aufgabe der vorliegenden Erfindung war es, einen Weichmacher mit niedriger Lösetemperatur und kurzer Gelierzeit bereit zu stellen, der als Ersatzstoff für Di(2-ethylhexyl)phthalat, Dibutylphthalat, und insbesondere Benzylbutylphthalat geeignet ist. Diese Aufgabe wird durch die erfindungsgemäßen Zubereitungen gelöst.

Gegenstand der Erfindung ist eine Zubereitung enthaltend
a) 5 - 50 Gew.-% Triacetin und
b) 50 - 95 Gew.-% eines oder mehrerer Weichmacher aus der Reihe
Isonoylbenzoat,
Di-2-ethylhexyladipat,
Tributylcitrat,
1,2-Cyclohexandicarbonsäurediisononylester,
Di-2-ethylhexylterephthalal
Diphenylkresylphosphat,
Tri-2-ethylhexylphosphat,
Phenylester von Alkansulfonsäuren (CAS 091082-17-6).

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind. Triacetin, auch Glycerintriacetat (CAS-Nummer 102-76-1), ist eine farblose, ölig bis ranzig riechende Flüssigkeit. Sie ist in Alkoholen und Ethern löslich und wird aus Glycerin und Essigsäure synthetisiert.

In einer bevorzugten Ausführungsform der Erfindung enthält die Zubereitung
a) 5 - 30 Gew.-% Triacetin,
b) 70 - 95 Gew.-% eines oder mehrerer Weichmacher aus der Reihe Isononylbenzoat, Di-2-ethylhexyladipat, Tributylcitrat, 1,2-Cyclohexandicarbonsäurediisononylester, Di-2-ethylhexylterephthalal Diphenylkresylphosphat, Tri-2-ethylhexylphosphat, Phenylester von Alkansulfonsäuren (CAS 091082-17-6).

Hierin ist auch eine Zusammensetzung offenbart, umfassend 5 bis 50 Gew.-% Triacetin und eines oder mehrerer Weichmacher, der bzw. die eine Lösetemperatur in Polyvinylchlorid von weniger als 180 °C aufweist(en).

Weichmacher mit einer Lösetemperatur in Polyvinylchlorid von weniger als 180 °C sind solche Substanzen oder Substanzmischungen wie sie zum Beispiel in L. Meier: "Weichmacher", in R. Gächter, H. Müller (Ed.): Taschenbuch der Kunststoffadditive, 3. Ausgabe, S. 383 - S. 425, Hanser Verlag, München 1990 beschrieben sind. Der Inhalt dieser Literaturstelle wird im Hinblick auf die erfindungsgemäß als Komponente b) einzusetzenden Weichmacher von der vorliegenden Erfindung vollumfänglich mit umfasst.

In einer bevorzugten Ausführungsform der Erfindung handelt es sich bei den in der Zubereitung enthaltenen Weichmachern um phthalatfreie Weichmacher.

Im Zusammenhang mit der vorliegenden Erfindung wird mit dem Begriff "phthalatfreier Weichmacher" eine Substanz oder eine Substanzmischung bezeichnet, die weniger als 1,0 Gew.-% Phthalsäuredialkylester enthält und die eine Lösetemperatur in Polyvinylchlorid von weniger als 180 °C aufweist.

In einer besonders bevorzugten Ausführungsform der Erfindung ist die Zubereitung dadurch gekennzeichnet, dass sie weniger als 0,1 Gew.-% Phthalsäuredialkylester enthält.

Die in der Zubereitung als Komponente b) einzusetzenden Weichmacher sind dem Fachmann bekannt. Bei den phthalatfreien Weichmachern handelt es sich besonders bevorzugt um Weichmacher der Reihe Alkylester der Benzoesäure, Dialkylester aliphatischer Dicarbonsäuren, Polyester von aliphatischen Dicarbonsäuren oder aliphatischen Di-, Tri- und Tetrolen, deren Endgruppen unverestert oder mit monofunktionellen Reagenzien, bevorzugt Monoalkoholen oder Monocarbonsäuren, verestert sind und deren zahlenmittlere Molmasse 1 000 - 20 000 g/mol beträgt, Trialkylester der Zitronensäure, acetylierte Trialkylester der Zitronensäure, Glycerinester, Benzoesäurediester von Mono-, Di-, Tri- oder Polyalkylenglycolen, Trimethylolpropanester, Dialkylester von Cyclohexandicarbonsäuren, Dialkylester der Terephthalsäure, Trialkylester der Trimellitsäure, Triarylester der Phosphorsäure, Diarylalkylester der Phosphorsäure, Trialkylester der Phosphorsäure, oder Arylester von Alkansulfonsäuren. Andere phthalatfreie Weichmacher sind ebenfalls geeignet.

Ein besonders bevorzugter Alkylester der Benzoesäure ist Isononylbenzoat. Ein besonders bevorzugter Dialkylester aliphatischer Dicarbonsäuren ist Di-2-ethylhexyladipat.

Besonders bevorzugte Polyester aliphatischer Dicarbonsäuren oder aliphatischer Di-, Tri- und Tetrolen deren Endgruppen mit monofunktionellen Reagenzien verestert sind und deren zahlenmittlere Molmasse 1000-20000 g/mol beträgt sind Adipinpolyester, insbesondere das Produkt Ultramoll®IV der Lanxess Deutschland GmbH.

Ein besonders bevorzugter Trialkylester der Zitronensäure ist Tributylcitrat.

Ein besonders bevorzugter acetylierter Trialkylester der Zitronensäure ist Acetyltributylcitrat.

Besonders bevorzugte Glycerinester sind acetylierte Mono- und Diglyceride.

Ein besonders bevorzugter Benzoesäurediester von Dialkylenglykolen ist Dipropylenglykoldibenzoat.

Besonders bevorzugte Trimethylolpropanester sind Trimethylolpropan-benzoat-2-ethylhexanoat-Gemische.

Ein besonders bevorzugter Dialkylester von Cyclohexandicarbonsäuren ist 1,2-Cyclohexandicarbonsäurediisononylester.

Ein besonders bevorzugter Dialkylester der Terephthalsäure ist Di-2-ethylhexylterephthalat.

Ein besonders bevorzugter Trialkylester der Trimellitsäure ist Tri-2-isononyltrimellitat.

Ein besonders bevorzugter Diarylalkylester der Phosphorsäure ist Diphenylkresylphosphat.

Ein besonders bevorzugter Trialkylester der Phosphorsäure ist Tri-2-ethylhexylphosphat.

Besonders bevorzugte Arylester von Alkansulfonsäuren sind Phenylester von Alkansulfonsäuren.

Insbesondere bevorzugt handelt es sich bei den in der Zubereitung enthaltenen Weichmachern um Phenylester von Alkansulfonsäuren, wie beispielweise das Produkt Mesamoll® der Lanxess Deutschland GmbH.

Die erfindungsgemäßen Zubereitungen können zusätzlich bekannte und kommerziell gut verfügbare Komponenten enthalten und können durch einfaches Mischen hergestellt werden. Sie zeichnen sich bei der Verarbeitung mit Polyvinylchlorid durch unerwartet kurze Gelierzeiten und günstige Migrationseigenschaften aus.

Gegenstand der Erfindung ist weiterhin die Verwendung von Triacetin bei der Herstellung von weichgemachtem Polyvinylchlorid, dadurch gekennzeichnet, dass
1. das Triacetin in Kombination mit einem oder mehreren Weichmachern verwendet wird und
2. die Zubereitung/Summe aus Triacetin und Weichmacher, die zur Herstellung von weichgemachten Polyvinylchlorid eingesetzt wird,
   a) 5 - 50 Gew.-% Triacetin und
   b) 50 - 95 Gew.-% eines oder mehrerer Weichmacher aus der Reihe Isononylbenzoat, Di-2-ethylhexyladipat, Tributylcitrat, 1,2-Cyclohexandicarbonsäurediisononylester, Di-2-ethylhexylterephthalal Diphenylkresylphosphat, Tri-2-ethylhexylphosphat, Phenylester von Alkansulfonsäuren (CAS 091082-17-6) enthält.

Eine bevorzugte Ausführungsform der Erfindung betrifft die Verwendung von Triacetin bei der Herstellung von weichgemachtem Polyvinylchlorid, dadurch gekennzeichnet, dass
1. das Triacetin in Kombination mit einem oder mehreren Weichmachern verwendet wird und
2. die Zubereitung/Summe aus Triacetin und Weichmacher zur Herstellung von weichgemachten Polyvinylchlorid
   a) 5 - 30 Gew.-% Triacetin und
   b) 70 - 95 Gew.-% eines oder mehrerer Weichmacher aus der Reihe Isononylbenzoat, Di-2-ethylhexyladipat, Tributylcitrat, 1,2-Cyclohexandicarbonsäurediisononylester, Di-2-ethylhexylterephthalal Diphenylkresylphosphat, Tri-2-ethylhexylphosphat, Phenylester von Alkansulfonsäuren (CAS 091082-17-6) enthält.

Die %-Angaben beziehen sich auf das Gewicht der Summe aus Triacetin und Weichmacher. Vorzugsweise handelt es sich bei den Weichmachern um phthalatfreie Weichmacher.

Verfahren zur Herstellung von weichgemachten Polyvinylchlorid sind bekannt, beispielsweise aus L. Meier: "Weichmacher", in R. Gächter, H. Müller (Ed.): Taschenbuch der Kunststoffadditive, 3. Ausgabe, S. 350 - S. 357, Hanser Verlag, München 1990. Triacetin und Weichmacher können in diesen Verfahren in Form einer zuvor hergestellten Zubereitung oder auch unabhängig voneinander in beliebiger Weise eingesetzt werden. Als phthalatfreie Weichmacher werden vorzugsweise die oben aufgeführten Substanzen verwendet. Bevorzugt werden als phthalatfreie Weichmacher die Phenylester von Alkansulfonsäuren, wie beispielweise das Produkt Mesamoll® der Lanxess Deutschland GmbH, verwendet.

Gegenstand der Erfindung ist schließlich eine Polyvinylchlorid-Zubereitung enthaltend Polyvinylchlorid, Triacetin und Weichmacher sowie gegebenenfalls weitere Zusatzstoffe, dadurch gekennzeichnet, dass
1. die Polyvinylchlorid-Zubereitung bezogen auf 100 Gewichtsteile Polyvinylchlorid
   a) 0,5 - 50 Gewichtsteile Triacetin und
   b) 5 - 95 Gewichtsteile eines oder mehrerer Weichmacher aus der Reihe Isononylbenzoat, Di-2-ethylhexyladipat, Tributylcitrat, 1,2-Cyclohexandicarbonsäurediisononylester, Di-2-ethylhexylterephthalal Diphenylkresylphosphat, Tri-2-ethylhexylphosphat, Phenylester von Alkansulfonsäuren (CAS 091082-17-6) enthält und
2. die Summe aus Triacetin und Weichmacher eine Menge von 10 - 100 Gewichtsteilen pro 100 Gewichtsteile Polyvinylchlorid ausmacht.

In einer bevorzugten Ausführungsform der Erfindung enthält die Polyvinylchlorid-Zubereitung bezogen auf 100 Gewichtsteile Polyvinylchlorid
a) 0,5 - 30 Gewichtsteile Triacetin und
b) 7 - 95 Gewichtsteile eines oder mehrerer Weichmacher aus der Reihe Isononylbenzoat, Di-2-ethylhexyladipat, Tributylcitrat, 1,2-Cyclohexandicarbonsäurediisononylester, Di-2-ethylhexylterephthalal Diphenylkresylphosphat, Tri-2-ethylhexylphosphat, Phenylester von Alkansulfonsäuren (CAS 091082-17-6),
wobei die Summe aus Triacetin und Weichmacher wiederum eine Menge von 10 - 100 Gewichtsteilen pro 100 Gewichtsteile Polyvinylchlorid ausmacht.

Vorzugsweise enthält die Polyvinylchlorid-Zubereitung als Weichmacher phthalatfreie Weichmacher. In einer besonders bevorzugten Ausführungsform der Erfindung ist die Polyvinylchlorid-Zubereitung dadurch gekennzeichnet, dass sie weniger als 0,1 Gew.-% Phthalsäuredialkylester enthält.

Die vorliegende Erfindung betrifft aber auch ein Verfahren zur Herstellung von weichgemachten Polyvinylchlorid, dadurch gekennzeichnet, dass man Triacetin, bevorzugt in Kombination mit einem oder mehreren Weichmacher aus der Reihe Isononylbenzoat, Di-2-ethylhexyladipat, Tributylcitrat, 1,2-Cyclohexandicarbonsäurediisononylester, Di-2-ethylhexylterephthalal Diphenylkresylphosphat, Tri-2-ethylhexylphosphat, Phenylester von Alkansulfonsäuren (CAS 091082-17-6), , einsetzt. einsetzt.

Das in der erfindungsgemäßen Polyvinylchlorid-Zubereitung enthaltene Polyvinylchlorid wird vorzugsweise durch Homopolymerisation aus Vinylchlorid nach dem Fachmann bekannten Methoden wie der Suspensions-, der Emulsions- oder der Massepolymerisation hergestellt. Als phthalatfreie Weichmacher werden die oben genannten Stoffe eingesetzt.

In einer bevorzugten Ausführungsform betrifft die vorliegende Erfindung eine Polyvinylchlorid-Zubereitung, dadurch gekennzeichnet, dass ein oder mehrere Zusatzstoffe ausgewählt aus der Gruppe PVC-Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller, Antistatika und/oder Biostabilisatoren eingesetzt werden.

Diese Zusatzstoffe können in beliebiger Kombination enthalten sein. Im Folgenden werden einige geeignete Zusatzstoffe näher beschrieben. Die aufgeführten Beispiele stellen jedoch keine Einschränkung der erfindungsgemäßen Polyvinylchlorid-Zubereitung dar, sondern dienen lediglich der Erläuterung. Alle %-Angaben beziehen sich auf das Gewicht der gesamten Polyvinylchlorid-Zubereitung.

PVC-Stabilisatoren neutralisieren die während und/oder nach der Verarbeitung des Polyvinylchlorid abgespaltene Salzsäure. Als PVC-Stabilisatoren kommen alle üblichen Polyvinylchlorid-Stabilisatoren in fester und flüssiger Form in Betracht, beispielsweise Epoxy/Zink-, Ca/Zn-, Ba/Zn-, Pb- oder Sn-Stabilisatoren sowie metallfreie Stabilisatoren und auch säurebindende Schichtsilikate wie Hydrotalcit. Erfindungsgemässe Polyvinylchlorid-Zubereitungen können vorzugsweise 0 - 7 %, bevorzugt 0,1 - 5 %, besonders bevorzugt 0,2 - 4 % und insbesondere 0,5 - 3 % Stabilisatoren enthalten.

In einer bevorzugten Ausführungsform sollen Gleitmittel zwischen den Polyvinylchlorid-Partikeln wirksam werden und Reibungskräften beim Mischen, Plastifizieren und Verformen entgegenwirken. Als Gleitmittel kann die erfindungsgemässe Polyvinylchlorid-Zubereitung alle für die Verarbeitung von Kunststoffen üblichen Gleitmittel enthalten, bevorzugt Kohlenwasserstoffe, besonders bevorzugt Öle, Paraffine und PE-Wachse, Fettalkohole mit 6 bis 20 C- Atomen, Ketone, Carbonsäuren, bevorzugt Fettsäuren oder Montansäuren, oxidiertes PE-Wachs, Metallsalze von Carbonsäuren, Carbonsäureamide sowie Carbonsäureester, bevorzugt mit den Alkoholen Ethanol, Fettalkoholen, Glycerin, Ethandiol, Pentaerythrit oder langkettigen Carbonsäuren als Säurekomponente. Die erfindungsgemäße Polyvinylchlorid-Zubereitung enthält vorzugsweise 0 - 10 %, bevorzugt 0,05 - 5 %, besonders bevorzugt 0,1 - 3 % und insbesondere von 0,2 - 2 % Gleitmittel.

In einer bevorzugten Ausführungsform beeinflussen Füllstoffe vor allem die Druck-, Zug- und Biegefestigkeit sowie die Härte und Wärmeformbeständigkeit von weichgemachtem Polyvinylchlorid in positiver Weise. Die erfindungsgemässe Polyvinylchlorid-Zubereitung kann als Füllstoffe Ruß, natürliche Calciumcarbonate, wie beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat, andere anorganische Füllstoffe und organische Füllstoffe, wie Holzmehl, -späne, oder -fasern enthalten. Vorzugsweise werden als Füllstoffe Calciumcarbonate, Kreide, Dolomit, Kaolin, Silikate, Talkum oder Ruß eingesetzt. Die erfindungsgemäße Polyvinylchlorid-Zubereitung enthält vorzugsweise 0 - 80 %, bevorzugt 0,1 - 60 %, besonders bevorzugt 0,5 - 50 % und insbesondere 1 - 40 % Füllstoffe.

Die erfindungsgemäße Polyvinylchlorid-Zubereitung kann auch Pigmente enthalten, um das erhaltene Produkt farblich an unterschiedliche Einsatzmöglichkeiten anzupassen. Dazu werden sowohl anorganische Pigmente als auch organische Pigmente eingesetzt. Als anorganische Pigmente können beispielsweise Cadmium-Pigmente, wie CdS, Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Anilinpigmente in Betracht. Die erfindungsgemäße Polyvinylchlorid-Zubereitung enthält vorzugsweise 0 - 10 %, bevorzugt 0,05 - 5 %, besonders bevorzugt 0,1 - 3 % und insbesondere von 0,5 - 2 % Pigmente.

Um die Entflammbarkeit zu vermindern und die Rauchentwicklung beim Verbrennen zu verringern, kann die erfindungsgemäße Polyvinylchlorid-Zubereitung auch Flammschutzmittel enthalten. Als Flammschutzmittel werden bevorzugt Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet. Die erfindungsgemäße Polyvinylchlorid-Zubereitung enthält vorzugsweise 0 - 30 %, bevorzugt 0,1 - 25 %, besonders bevorzugt 0,2 - 20 % und insbesondere 0,5 - 15 % Flammschutzmittel.

Um Artikel, die aus der erfindungsgemäßen Polyvinylchlorid-Zubereitung hergestellt wurden vor einer Schädigung durch den Einfluss von Licht zu schützen, können Lichtstabilisatoren zugesetzt werden. Dazu werden bevorzugt Hydroxybenzophenone oder Hydroxyphenylbenzotriazole eingesetzt. Die erfindungsgemäße Polyvinylchlorid-Zubereitung enthält vorzugsweise 0 - 7 %, bevorzugt 0,1 - 5 %, besonders bevorzugt 0,2 - 4 % und insbesondere 0,5 - 3 % Lichtstabilisatoren.

Die erfindungsgemäße Polyvinylchlorid-Zubereitung kann zur Herstellung von Schaumstoffen unter Verwendung von Treibmitteln verwendet werden. Dazu werden ihr chemisch oder physikalisch wirkende Treibmittel zugefügt. Als chemisch wirkende Treibmittel kommen alle für diesen Zweck bekannten Substanzen in Betracht, bevorzugt Azodicarbonamid, p-Toluolsulfonylhydrazid, 4,4'-Oxybis(benzolsulfohydrazid), p-Toluolsulfonylsemicarbazid, 5-Phenyltetrazol, N,N'-Dinitrosopentamethylentetramin, Zinkcarbonat oder Natriumhydrogencarbonat sowie diese Substanzen enthaltende Mischungen. Als physikalisch wirkende Treibmittel sind bevorzugt Kohlendioxid oder Halogenkohlenwasserstoffe geeignet. Die erfindungsgemäße Polyvinylchlorid-Zubereitung enthält vorzugsweise 0 - 20 %, bevorzugt 0,05 - 15 %, besonders bevorzugt 0,1 - 10 % und insbesondere 0,7 - 3 % Treibmittel.

Die Polyvinylchlorid-Zubereitung kann auch weitere Kunststoffe enthalten, die beispielsweise als polymere Verarbeitungshilfsmittel oder Schlagzähverbesserer wirken. Diese weiteren Kunststoffe werden ausgewählt aus der Reihe der Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C₁- bis C₁₀-Alkoholen, Styrol oder Acrylnitril. Besonders bevorzugt sind Polyacrylate mit gleichen oder verschiedenen Alkoholresten aus der Gruppe der C₄- bis C₈-Alkohole, insbesondere des Butanols, Hexanols, Octanols und 2-Ethylhexanols, Polymethylmethacrylat, Methyl-methacrylat-Butylacrylat-Copolymere, Methyl-methacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Die erfindungsgemäße Polyvinylchlorid-Zubereitung wird nach den bekannten Verfahren zur Herstellung von weichgemachtem Polyvinylchlorid hergestellt und weiter verarbeitet. Sie wird verwendet zur Herstellung von Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Planen, Folien, Verbundfolien, Folien für Verbundsicherheitsglas, insbesondere für den Fahrzeug-Bereich und den Architektur-Sektor, Kunstleder, Spielzeug, Verpackungsbehältern, Klebebandfolien, Bekleidung, Beschichtungen, sowie Fasern für Gewebe.

Die vorliegende Erfindung betrifft schließlich auch die Beschleunigung der Gelierung von Polyvinylchlorid-Plastisolen durch Einsatz von Triacetin in Kombination mit einem oder mehreren Weichmacher aus der Reihe Isononylbenzoat, Di-2-ethylhexyladipat, Tributylcitrat, 1,2-Cyclohexandicarbonsäurediisononylester, Di-2-ethylhexylterephthalal Diphenylkresylphosphat, Tri-2-ethylhexylphosphat, Phenylester von Alkansulfonsäuren (CAS 091082-17-6), wobei das Triacetin und der Weichmacher dabei in den oben genannten Gew.-%en als Zubereitung eingesetzt wird.

Anhand der nachfolgenden Beispiele wird die Erfindung näher erläutert, ohne dass dadurch eine Einschränkung der Erfindung bewirkt werden soll.

### Beispiele

Sofern nicht anders vermerkt, beziehen sich alle Teile und Prozentangaben auf das Gewicht. Die angegebenen Vergleichsbeispiele sind nicht erfindungsgemäß.

### Verwendete Substanzen:

Vinnolit® H 70 DF, Vinnolit GmbH & Co. KG, Ismaning (Suspensions-Polyvinylchlorid, K-Wert 70, > 95 % Siebrückstand auf Sieb mit Maschenweite 0,063 mm).
Vestolit® B 7021, Vestolit GmbH & Co. KG, Marl (Suspensions-Polyvinylchlorid, K-Wert 70, < 1 % Siebrückstand auf Sieb mit Maschenweite 0,063 mm).
Triacetin, Lanxess Deutschland GmbH, Leverkusen (Glycerintriacetat).
Mesamoll®, Lanxess Deutschland GmbH, Leverkusen (Phenylester von Alkansulfonsäuren).
Unimoll® BB, Lanxess Deutschland GmbH, Leverkusen (Benzylbutylphthalat).
Ultramoll® IV, Lanxess Deutschland GmbH, Leverkusen (Adipinsäurepolyester).
Adimoll® DO, Lanxess Deutschland GmbH, Leverkusen (Adipinsäuredi-2-ethylhexylester).
Irgastab® CZ 11, Ciba Specialty Chemicals, Basel (Stabilisator auf Basis von Calcium-Zinkcarboxylaten).

### Lösetemperatur

48,0 g der zu prüfenden Substanz wurden in ein Becherglas mit Magnetrührstab und Thermometer eingewogen. Das Becherglas wurde auf einem Magnetheizrührer in eine Halterung zwischen einer Lampe und einer Photozelle gesetzt. Über die Photozelle wurden Änderungen in der Lichtdurchlässigkeit der Probe registriert. Dann wurden 2,0 g Polyvinylchlorid (Vinnolit® H 70 DF) zugesetzt. Das Polyvinylchlorid wurde in den Weichmacher eingerührt und unter Rühren mit 5 - 8 °C pro min aufgeheizt. 30 °C unter der zu erwartenden Lösetemperatur wurde die Aufheizrate auf 2 - 3 °C pro min zurückgefahren. Die Lösetemperatur galt als erreicht, wenn 3 min hintereinander keinerlei Anstieg in der Anzeige der Photozelle mehr erzielt wurde und das Polyvinylchlorid gelöst war. Die Bestimmung wurde bis max. 200 °C durchgeführt, war dann noch keine Lösung erreicht, wurde abgebrochen und die Lösetemperatur als nicht bestimmbar notiert. Es wurden jeweils Doppelbestimmungen durchgeführt und bei einer Abweichung von mehr als 2 °C wiederholt.

Die Ergebnisse dieser Prüfung sind in Tabelle 1 aufgeführt.

**Tabelle 1: Zusammensetzung (Gew.-%) und Lösetemperaturen der Beispiele B1 bis B6 und der Vergleichsbeispiele V1 und V2.**

| **Beispiel** | **V1** | **B1** | **B2** | **B3** | **B4** | **B5** | **B6** | **V2** |
|---|---|---|---|---|---|---|---|---|
| Triacetin | 100 % | 25 % | 20 % | 15 % | 10 % | 7,5 % | 5 % | 0 % |
| Mesamoll® | 0 % | 75 % | 80 % | 85 % | 90 % | 92,5 % | 95 % | 100 % |
| Unimoll® BB | 0 % | 0 % | 0 % | 0 % | 0 % | 0 % | 0 % | 0 % |
| Lösetemperatur [°C] | > 200 | 120 | 117 | 119 | 119 | 119 | 122 | 119 |

### Auswertung Lösetemperatur

Triacetin hat eine Lösetemperatur von über 200 °C und ist daher als Weichmacher für Polyvinylchlorid ungeeignet (Vergleichsbeispiel V 1). Mischungen von Triacetin und Mesamoll® (Beispiele B 1 bis B 6) hingegen weisen sehr niedrige Lösetemperaturen auf, die sich kaum von der Lösetemperatur des reinen Mesamoll® von 119 °C (Vergleichsbeispiel V 2) unterschieden. Daran zeigt sich, dass die erfindungsgemäßen phthalatfreien Mischungen der Beispiele B 1 bis B 6 eine überraschend gute Verträglichkeit mit Polyvinylchlorid aufweisen. Da Triacetin selber als Weichmacher für Polyvinylchlorid ungeeignet ist, war diese gute Verträglichkeit nicht zu erwarten.

### Viskosität

Polyvinylchlorid (Vestolit® B 7021) und Weichmacher wurden in den in Tabelle 2 angegeben Mengenverhältnissen in einem Messbecher (Aluminium) eingewogen, bei 20 °C in einem Pastenevakuiergerät Mathis LPE (Firma Mathis, Schweiz) für 5 min verrührt und für 24 h bei 20 °C gelagert. Die erhaltene Suspension wurde mittels eines thermostatisierten Ölbades auf 20 °C temperiert. Dann wurde die Viskosität der Suspension mit einem Rheometer (Rheolab MC 120, Anton Paar Germany GmbH, Ostfildern) bestimmt. Die Ergebnisse dieser Prüfung sind in Tabelle 2 aufgeführt.

**Tabelle 2: Zusammensetzung (Teile) und Viskositäten der Beispiele B7 und B8 und der Vergleichsbeispiele V4 und V5.**

| **Beispiel** | **V4** | **V5** | **B7** | **B8** |
|---|---|---|---|---|
| Vestolit® B 7021 | 100 | 100 | 100 | 100 |
| Triacetin | 0 | 0 | 10 | 20 |
| Mesamoll® | 0 | 80 | 70 | 60 |
| Unimoll® BB | 80 | 0 | 0 | 0 |
| Viskosität [mPas] | 1800 | 2670 | 2040 | 1520 |

### Auswertung Viskosität

Die Viskosität einer Polyvinylchlorid-Suspension in einem Weichmacher ist in der Verarbeitung von Polyvinylchlorid eine wichtige Größe. Oft ist eine niedrige Viskosität für eine einfache Verarbeitung erforderlich. Die Polyvinylchlorid-Suspension mit dem phthalatbasierten Weichmacher Unimoll® BB (Vergleichsbeispiel V 4) zeigt eine deutlich niedrigere Viskosität als die entsprechende Suspension mit dem phthalatfreien Weichmacher Mesamoll® (Vergleichsbeispiel V 5). Dieser offensichtliche technische Nachteil des Mesamoll® gegenüber Unimoll® BB kann aufgehoben werden, wenn das Mesamoll® mit Triacetin gemischt wird. Die Viskositäten der Mischungen in den Beispielen B 7 und B 8 liegen deutlich unter der Viskosität der Mesamoll®-Suspension und im Falle von B 8 sogar unter derjenigen der Unimoll®-BB-Suspension.

### Gelierzeit

Es wurden Polyvinylchlorid-Suspensionen wie oben für die Viskositätsmessung beschrieben zubereitet. Diese Suspensionen wurden im beschriebenen Rheometer bei 70 °C geliert. Dabei wurde die Zeit bestimmt, in der durch Gelierung eine Viskosität von 500 000 mPas erreicht wurde. Die Ergebnisse dieser Prüfung sind in Tabelle 3 aufgeführt.

**Tabelle 3: Zusammensetzung (Teile) und Gelierzeiten des Beispiels B7 und B8 und der Vergleichsbeispiele V4 und V5.**

| **Beispiel** | **V4** | **V5** | **B7** |
|---|---|---|---|
| Vestolit® B 7021 | 100 | 100 | 100 |
| Triacetin | 0 | 0 | 20 |
| Mesamoll® | 0 | 80 | 60 |
| Unimoll® BB | 80 | 0 | 0 |
| Gelierzeit [min] | 1,6 | 7,0 | 3,8 |

### Auswertung Gelierzeit

Für eine technisch und wirtschaftlich akzeptable Arbeitsweise ist die Gelierzeit eines Weichmachers eine entscheidende Größe. Der dem Fachmann als Schnellgelierer bekannte, phthalatbasierte Weichmacher Unimoll® BB (Vergleichsbeispiel V 4) geliert deutlich schneller als der phthalatfreie Weichmacher Mesamoll® (Vergleichsbeispiel V 5). Dieser gravierende technische Nachteil des Mesamoll® gegenüber Unimoll® BB kann deutlich gemindert werden, wenn das Mesamoll® mit Triacetin gemischt wird (Beispiel B 7).

### Weichmachende Wirkung

Zur Bestimmung der weichmachenden Wirkung von Weichmachermischungen wurden 6 mm starke Walzfelle aus Polyvinylchlorid-Compounds der in Tabelle 4 angegebenen Zusammensetzung hergestellt. Aus den Walzfellen wurden Prüfkörper mit 35 mm Durchmesser geschnitten, deren Shore-Härte mittels eines digitalen Shore-Härte-Testers (Zwick GmbH & Co. KG, Ulm) bestimmt wurde. Die Ergebnisse (Mittelwerte von jeweils fünf Messungen) dieser Prüfung sind in Tabelle 4 aufgeführt.

**Tabelle 4: Zusammensetzung (Teile) und Shore-Härten der Beispiele B8 bis B10 und der Vergleichsbeispiele V6 bis V8.**

| **Beispiel** | **V6** | **V7** | **V8** | **B9** | **B10** | **B11*** |
|---|---|---|---|---|---|---|
| Vestolit® B 7021 | 100 | 100 | 100 | 100 | 100 | 100 |
| Triacetin | 0 | 0 | 0 | 10 | 20 | 20 |
| Mesamoll® | 0 | 80 | 0 | 70 | 60 | 0 |
| Unimoll® BB | 80 | 0 | 0 | 0 | 0 | 0 |
| Ultramoll® IV | 0 | 0 | 40 | 0 | 0 | 40 |
| Adimoll® DO | 0 | 0 | 20 | 0 | 0 | 0 |
| Irgastab® CZ 11 | 4 | 4 | 3 | 4 | 4 | 3 |
| Shore A | 55 | 55 | 65 | 54 | 59 | 66 |
| Shore D | 14 | 14 | 18 | 13 | 13 | 20 |

| | | | | | | |
|---|---|---|---|---|---|---|
| * Referenz Beispiel | | | | | | |

### Auswertung weichmachende Wirkung

Die weichmachende Wirkung verschiedener Weichmacher bei gleichen Einsatzmengen kann anhand von Härtebestimmungen verglichen werden. Wie die Messergebnisse aus Tabelle 4 zeigen, können mit den erfindungsgemäßen Weichmacher-Zubereitungen Polyvinylchlorid-Compounds hergestellt werden, deren Härtegrade denjenigen aus dem Stand der Technik entsprechen. Die weichmachenden Eigenschaften des Weichmachers Mesamoll® (Vergleichsbeispiel V 7) werden überraschender Weise durch Beimischung des Nichtweichmachers Triacetin nicht wesentlich verändert (Beispiele B 9 und B 10). Vergleichsbeispiel V 8 ist eine Rezeptur, wie sie zur Herstellung von Lebensmittelfolien verwendet wird. Im Vergleich hierzu zeigt das Beispiel B 11, dass der Ersatz des Weichmachers Adimoll® DO aus dieser Rezeptur durch den Nichtweichmacher Triacetin mit nur minimalen Einbußen in der Weichheit einhergeht, was aus den bekannten Eigenschaften von Triacetin nicht vorherzusagen war.

### Gesamtauswertung

In Hinblick auf eine Anwendung in Polyvinylchlorid ist Triacetin alleine nicht als Weichmacher geeignet. Überraschenderweise wurden jedoch für Zubereitungen aus Triacetin und bevorzugt phthalatfreien Weichmachern gute weichmachende Eigenschaften gefunden. Darüber hinaus zeigen diese erfindungsgemäßen Zubereitungen unerwartet günstige Verarbeitungseigenschaften, wie niedrige Viskosität der Polyvinylchlorid-Suspension und kurze Gelierzeit.

## Patentansprüche

1. Zubereitung, enthaltend
a) 5 - 50 Gew.-% Triacetin und
b) 50 - 95 Gew.-% eines oder mehrerer Weichmacher aus der Reihe
Isononylbenzoat,
Di-2-ethylhexyladipat,
Tributylcitrat,
1,2-Cyclohexandicarbonsäurediisononylester,
Di-2-ethylhexylterephthalat,
Diphenylkresylphosphat,
Tri-2-ethylhexylphosphat,
Phenylester von Alkansulfonsäuren (CAS 091082-17-6).

2. Zubereitung gemäß Anspruch 1, **dadurch gekennzeichnet, dass** diese
a) 5 - 30 Gew.-% Triacetin und
b) 70 - 95 Gew.-% eines oder mehrerer Weichmacher
enthält.

3. Zubereitung gemäß Anspruch 1 oder 2, **dadurch gekennzeichnet, dass** sie weniger als 0,1 Gew.-% Phthalsäuredialkylester enthält.

4. Polyvinylchlorid-Zubereitung enthaltend Polyvinylchlorid, Triacetin und Weichmacher, **dadurch gekennzeichnet, dass** die Polyvinylchlorid-Zubereitung bezogen auf 100 Gewichtsteile Polyvinylchlorid
a) 0,5 - 50 Gewichtsteile Triacetin und
b) 5 - 95 Gewichtsteile eines oder mehrerer Weichmacher aus der Reihe Isononylbenzoat,
Di-2-ethylhexyladipat,
Tributylcitrat,
1,2-Cyclohexandicarbonsäurediisononylester,
Di-2-ethylhexylterephthalat,
Diphenylkresylphosphat,
Tri-2-ethylhexylphosphat,
Phenylester von Alkansulfonsäuren (CAS 091082-17-6)
enthält, und die Summe aus Triacetin und Weichmacher eine Menge von 10 - 100 Gewichtsteile pro 100 Gewichtsteile Polyvinylchlorid ausmacht.

5. Polyvinylchlorid-Zubereitung gemäß Anspruch 4, **dadurch gekennzeichnet, dass** die Polyvinylchlorid-Zubereitung bezogen auf 100 Gewichtsteile Polyvinylchlorid
a) 0,5 - 30 Gewichtsteile Triacetin und
b) 7 - 95 Gewichtsteile eines oder mehrerer Weichmacher enthält.

6. Polyvinylchlorid-Zubereitung gemäß Anspruch 4 oder 5, **dadurch gekennzeichnet, dass** ein oder mehrere Zusatzstoffe ausgewählt aus der Gruppe PVC-Stabilisatoren, Gleitmittel, Weichmachern, Füllstoffe, Pigmente, Flammschutzmittel, Lichtstabilisatoren, Treibmittel, polymere Verarbeitungshilfsmittel, Schlagzähverbesserer, optische Aufheller, Antistatika und/oder Biostabilisatoren eingesetzt werden.

7. Polyvinylchlorid-Zubereitung gemäß mindestens einem der Ansprüche 4 bis 6, **dadurch gekennzeichnet, dass** sie weniger als 0,1 Gew.-% an Phthalsäuredialkylestern enthält.

8. Verwendung der Polyvinylchlorid-Zubereitungen gemäß mindestens einem der Ansprüche 4 bis 7 zur Herstellung von Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Folien, Verbundfolien, Folien für Verbundsicherheitsglas, insbesondere für den Fahrzeug-Bereich und den Architektur-Sektor, Kunstleder, Spielzeug, Verpackungsbehältern, Klebebandfolien, Bekleidung, Beschichtungen, sowie Fasern für Gewebe.

## Claims

1. Preparation, comprising
a) from 5 to 50% by weight of triacetin and
b) from 50 to 95% by weight of one or more plasticizers from the group of
isononyl benzoate,
di-2-ethylhexyl adipate,
tributyl citrate,
diisononyl 1,2-cyclohexanedicarboxylate,
di-2-ethylhexyl terephthalate,
diphenyl cresyl phosphate,
tri-2-ethylhexyl phosphate,
phenyl esters of alkanesulphonic acids (CAS 091082-17-6).

2. Preparation according to Claim 1, **characterized in that** it comprises
a) from 5 to 30% by weight of triacetin and
b) from 70 to 95% by weight of one or more plasticizers.

3. Preparation according to Claim 1 or 2, **characterized in that** it comprises less than 0.1% by weight of dialkyl phthalate.

4. Polyvinyl chloride preparation comprising polyvinyl chloride, triacetin and plasticizer, **characterized in that** the polyvinyl chloride preparation comprises, based on 100 parts by weight of polyvinyl chloride,
a) from 0.5 to 50 parts by weight of triacetin
and
b) from 5 to 95 parts by weight of one or more plasticizers from the group of
isononyl benzoate,
di-2-ethylhexyl adipate,
tributyl citrate,
diisononyl 1,2-cyclohexanedicarboxylate,
di-2-ethylhexyl terephthalate,
diphenyl cresyl phosphate,
tri-2-ethylhexyl phosphate,
phenyl esters of alkanesulphonic acids (CAS 091082-17-6).
and the entirety composed of triacetin and plasticizer makes up an amount of from 10 to 100 parts by weight per 100 parts by weight of polyvinyl chloride.

5. Polyvinyl chloride preparation according to Claim 4, **characterized in that** the polyvinyl chloride preparation comprises, based on 100 parts by weight of polyvinyl chloride,
a) from 0.5 to 30 parts by weight of triacetin and
b) from 7 to 95 parts by weight of one or more plasticizers.

6. Polyvinyl chloride preparation according to Claim 4 or 5, **characterized in that** one or more additives are used, selected from the group of PVC stabilizers, lubricants, plasticizers, fillers, pigments, flame retardants, light stabilizers, blowing agents, polymeric processing aids, impact modifiers, optical brighteners, antistatic agents and/or biostabilizers.

7. Polyvinyl chloride preparation according to at least one of Claims 4 to 6, **characterized in that** it comprises less than 0.1% by weight of dialkyl phthalates.

8. Use of the polyvinyl chloride preparations according to at least one of Claims 4 to 7 for the production of pipelines, of cables, of wire sheathing, in internal fittings, or in the construction of vehicles or of furniture, in floor coverings, in medical items, in food-or-drink packing, in gaskets, in foils, including composite foils and foils for laminated safety glass, particularly for the vehicle sector and for the architecture sector, or in synthetic leather, toys, packaging containers, adhesive-tape foils, apparel, coatings, or else fibres for textiles.

## Revendications

1. Préparation, contenant :
a) 5 à 50 % en poids de triacétine et
b) 50 à 95 % en poids d'un ou de plusieurs plastifiants de la série constituée par :
le benzoate d'isononyle,
l'adipate de di-2-éthylhexyle,
le citrate de tributyle,
l'ester diisononylique de l'acide 1,2-cyclohexane-dicarboxylique,
le téréphtalate de di-2-éthylhexyle,
le phosphate de diphénylcrésyle,
le phosphate de tri-2-éthylhexyle,
les esters phényliques d'acides alcane-sulfoniques (CAS 091082-17-6).

2. Préparation selon la revendication 1, **caractérisée en ce que** celle-ci contient :
a) 5 à 30 % en poids de triacétine et
b) 70 à 95 % en poids d'un ou de plusieurs plastifiants.

3. Préparation selon la revendication 1 ou 2, **caractérisée en ce qu'**elle contient moins de 0,1 % en poids d'esters dialkyliques de l'acide phtalique.

4. Préparation de polychlorure de vinyle contenant du polychlorure de vinyle, de la triacétine et des plastifiants, **caractérisée en ce que** la préparation de polychlorure de vinyle contient, par rapport à 100 parties en poids de polychlorure de vinyle :
a) 0,5 à 50 parties en poids de triacétine et
b) 5 à 95 parties en poids d'un ou de plusieurs plastifiants de la série constituée par :
le benzoate d'isononyle,
l'adipate de di-2-éthylhexyle,
le citrate de tributyle,
l'ester diisononylique de l'acide 1,2-cyclohexane-dicarboxylique,
le téréphtalate de di-2-éthylhexyle,
le phosphate de diphénylcrésyle,
le phosphate de tri-2-éthylhexyle,
les esters phényliques d'acides alcane-sulfoniques (CAS 091082-17-6),
et la somme de la triacétine et des plastifiants représente une quantité de 10 à 100 parties en poids, pour 100 parties en poids de polychlorure de vinyle.

5. Préparation de polychlorure de vinyle selon la revendication 4, **caractérisée en ce que** la préparation de polychlorure de vinyle contient, par rapport à 100 parties en poids de polychlorure de vinyle :
a) 0,5 à 30 parties en poids de triacétine et
b) 7 à 95 parties en poids d'un ou de plusieurs plastifiants.

6. Préparation de polychlorure de vinyle selon la revendication 4 ou 5, **caractérisée en ce qu'**un ou plusieurs additifs choisis dans le groupe constitué par les stabilisateurs de PVC, les agents lubrifiants, les plastifiants, les charges, les pigments, les agents ignifuges, les photostabilisateurs, les agents gonflants, les adjuvants d'usinage polymères, les agents d'amélioration de la résistance aux impacts, les azurants optiques, les antistatiques et/ou les biostabilisateurs sont utilisés.

7. Préparation de polychlorure de vinyle selon au moins l'une quelconque des revendications 4 à 6, **caractérisée en ce qu'**elle contient moins de 0,1 % en poids d'esters dialkyliques de l'acide phtalique.

8. Utilisation des préparations de polychlorure de vinyle selon au moins l'une quelconque des revendications 4 à 7 pour la fabrication de canalisations, de câbles, d'enrobages de fils, dans la décoration intérieure, dans la fabrication de véhicules et de meubles, dans des revêtements de sol, des articles médicaux, des emballages de produits alimentaires, des joints, des films, des films composites, des films pour verre de sécurité composite, notamment pour le domaine des véhicules et le secteur de l'architecture, le cuir artificiel, les jouets, les contenants d'emballage, les films de bande adhésive, les vêtements, les revêtements, ainsi que les fibres pour tissus.
